# EUROPEAN PATENT SPECIFICATION

(11) **EP 1 081 351 B1**
(45) Date of publication and mention of the grant of the patent: **15.10.2003**
(21) Application number: 00116537.2
(22) Date of filing: 31.07.2000
(51) Int. Cl.: F02B 31/08, F02M 35/104, F02M 25/07

(54) **Air intake system for internal combustion engine**
Einlasssystem für Brennkraftmaschine
Système d'admission pour moteur à combustion interne

(30) Priority: 31.08.1999 JP 24590599
(43) Date of publication of application: 07.03.2001
(73) Proprietor: HONDA GIKEN KOGYO KABUSHIKI KAISHA, Minato-ku Tokyo (JP)
(72) Inventor: Mondori, Fumihiro, c/o Honda R & D Co., Ltd., Wako-shi, Saitama (JP); Ohshima, Masami, c/o Honda R & D Co., Ltd., Wako-shi, Saitama (JP)
(74) Representative: Prechtel, Jörg, Dipl.-Phys. Dr.

(56) References cited:
- DE-A- 19 813 747
- US-A- 4 270 500
- US-A- 4 811 697
- US-A- 4 856 473
- PATENT ABSTRACTS OF JAPAN vol. 1999, no. 11, 30 September 1999 (1999-09-30) & JP 11 148429 A (MITSUBISHI MOTORS CORP), 2 June 1999 (1999-06-02)
- PATENT ABSTRACTS OF JAPAN vol. 017, no. 294 (M-1424), 7 June 1993 (1993-06-07) & JP 05 018254 A (MAZDA MOTOR CORP), 26 January 1993 (1993-01-26)
- PATENT ABSTRACTS OF JAPAN vol. 005, no. 033 (M-057), 28 February 1981 (1981-02-28) & JP 55 160149 A (MITSUBISHI MOTORS CORP), 12 December 1980 (1980-12-12)

## Description

### BACKGROUND OF THE INVENTION

### 1. Field of the Invention

The present invention relates to an intake system for an internal combustion engine having a plurality of cylinders comprising mainly a diesel engine.

### 2. Description of the Related Art

Conventionally, known as an intake system of this type is an intake system in which at least two intake ports having different configurations are formed in a cylinder head for each cylinder, in which a collective chamber adapted to communicate with one intake port of each cylinder and a collective chamber adapted to communicate with the other intake port of each cylinder are formed in an intake manifold, and in which an opening/closing valve is provided at an inlet of one collective chamber which is adapted to communicate with a common intake passage upstream of the intake manifold, whereby the swirl ratio is able to be changed in response to the operating condition of the engine by controlling the opening of the opening/closing valve (refer to JP-A-5-18254).

Additionally, in this intake system, an exhaust reflux gas induction port is opened into the one collective chamber having the opening/closing valve at the inlet thereof.

In the intake system of the conventional type, even if the suction of intake air via the one intake port communicating with the one collective chamber is tried to be stopped by closing the opening/closing valve, since exhaust reflux gas is taken in via the one intake port during the reflux of exhaust gas, a required swirl ratio cannot be obtained. Due to this, when the opening/closing valve is closed, the reflux of exhaust gas cannot be carried out, this disadvantageously imposing a limitation to the exhaust gas reflux timing.

In addition, in a case where blowby gas is tried to be induced into the intake passage, when oil contained in blowby gas flows to near the exhaust reflux gas induction port, carbon contained in the exhaust reflux gas mixes with the oil, which is then transformed into a tar-like substance. Since the tar-like oil so transformed adheres to the vicinity of the exhaust reflux gas induction port, there may be a risk that a target exhaust reflux rate cannot be obtained.

### SUMMARY OF THE INVENTION

The invention was made in view of the above problems, and an object thereof is to provide an intake system for an internal combustion engine which can improve the degree of freedom at which the exhaust reflux timing is designed and prevent the flow of the oil to the vicinity of the exhaust reflux gas induction port.

With a view to attaining the object, according to the invention, there is provided an air intake system for an internal combustion engine having a plurality of cylinders in which at least two intake ports having different configurations are formed in a cylinder head for each cylinder, a collective chamber adapted to communicate with one intake port of each cylinder and a collective chamber adapted to communicate with the other intake port of each cylinder being formed in an intake manifold, and in which an opening/closing valve is provided at an inlet of one collective chamber which is adapted to communicate with a common intake passage upstream of the intake manifold, the intake system being characterized in that a blowby gas induction port is opened into the intake passage and that the other collective chamber is disposed in vertical direction above the one collective chamber and an exhaust reflux gas induction port is opened only into the other collective chamber.

According to the invention, exhaust reflux gas is induced into the other collective chamber which is different from the one collective chamber in which the opening/closing valve is provided at the inlet thereof. Due to this, even if exhaust reflux is carried out when the opening/closing valve is closed, exhaust reflux gas is taken in only from the intake ports communicating with the other collective chamber to thereby obtain a required swirl ratio. Thus, exhaust reflux can be carried out even when the opening/closing valve is closed, this increasing the degree of freedom at which the exhaust reflux timing is designed.

In addition, since the specific gravity of oil contained in blowby gas is heavy, most oil so contained flows into the one collective chamber disposed lower. Thus, the oil is made difficult to flow to the vicinity of the exhaust reflux gas induction port opened into the other collective chamber which is disposed upper, thereby making it possible to restrain tar-like oil into which the oil is transformed when it mixes with carbon from adhering to the vicinity of the exhaust reflux gas induction port.

### BRIEF DESCRIPTION OF THE DRAWINGS

Fig. 1 is a system diagram showing the construction of a diesel engine and an intake system which show one example of an intake system according to the invention;
Fig. 2A is an enlarged longitudinally cross-sectional plan view taken along the line IIA-IIA of Fig. 1;
Fig. 2B is an enlarged longitudinally cross-sectional plan view taken along the line IIB-IIB of Fig. 1; and
Fig. 3 is a longitudinally vertical cross-sectional view of an intake manifold taken along the line III-III of Fig. 2B.

### DETAILED DESCRIPTION OF THE PREFERRED EMBODIMENTS

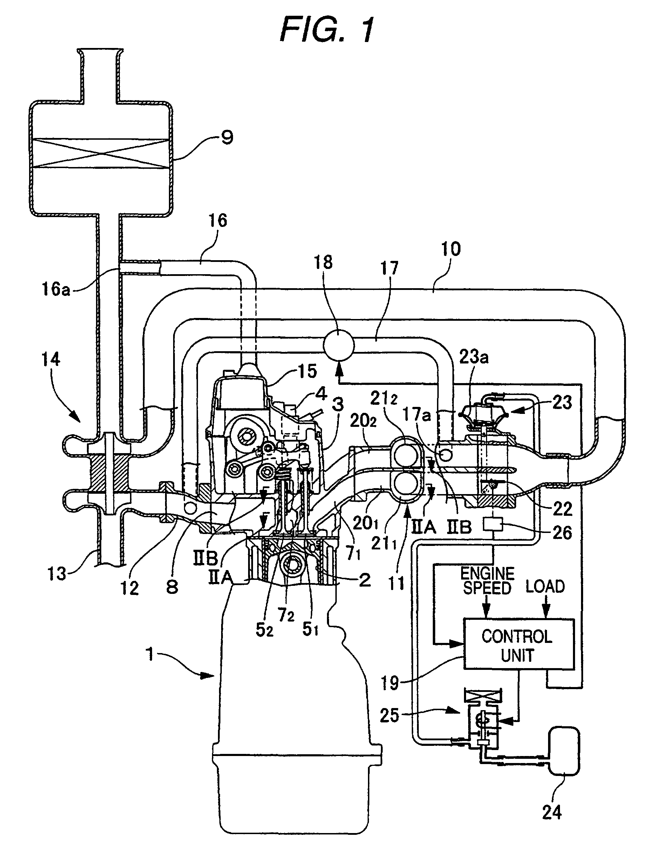

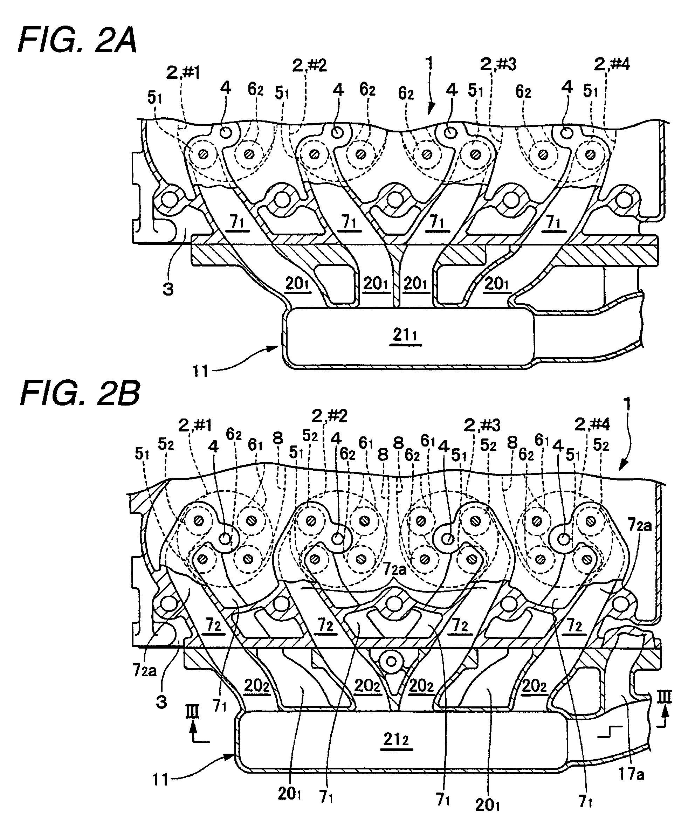

Referring to Fig. 1, reference numeral 1 denotes a diesel engine which is an internal combustion engine. As shown in Fig. 2, this engine is provided with four cylinders 2 such as #1, #2, #3 and #4 cylinders, and disposed in a cylinder head 3 thereof are fuel injectors 4 positioned such that one fuel injector 4 is positioned at the center of each cylinder 2, two intake valves 5₁, 5₂ positioned on one side of each cylinder 2 in a direction in which the cylinders are aligned or a cylinder aligning direction, and two exhaust valves 6₁, 6₂ positioned on the other side of each cylinder 2 in the cylinder aligning direction. Also formed in the cylinder head 3 are two individual intake ports 7₁, 7₂ provided for each cylinder 2 in such a manner as to extend from the two intake ports 5₁, 5₂ of the cylinder 2, respectively, and one exhaust port 8 provided for each cylinder 2 in such a manner as to extend from the two exhaust ports 6₁, 6₂ of the cylinder 2. Then, air from an air cleaner 9 is supplied to the intake ports 7₁, 7₂ via an intake passage 10 and an intake manifold 11, while exhaust gas from the exhaust ports 8 is discharged into an exhaust passage 13 via an exhaust manifold 12.

Additionally, a turbocharger 14 is provided, and a breather gas induction port 16a is opened into a position along the intake passage 10 upstream of the turbocharger 14 for connection with a breather passage 16 extending from a head cover 15 of the engine 1. Furthermore, a exhaust reflux gas induction port 17a is opened into the intake manifold 11 for connection with an exhaust reflux passage 17 extending from the exhaust manifold 12. A control valve 18 is provided at a position along the exhaust reflux passage 17 so that exhaust reflux is carried out in response to the operating condition of the engine 1 by controlling the control valve 18 so as to be opened or closed by a control unit 19.

Of the intake ports 7₁, 7₂, the first intake ports 7₁ extending from the first intake valves 5₁ positioned closer to the intake manifold 11 as viewed from an attaching face side thereof are each a substantially linear straight port in a projection in the axial direction of the cylinder, as shown in Fig. 2A, while the second intake ports 7₂ extending from the second intake valves 5₂ positioned farther from the intake manifold 11 as viewed from the attaching face side thereof are each a bent swirl port in a projection in the axial direction of the cylinder, as shown in Fig. 2B. The first intake ports 7₁ are each directed toward the center of the cylinder when compared with the second intake ports 7₂, and the swirl generation effect becomes higher in the second intake ports 7₂ than in the first intake ports 7₁.

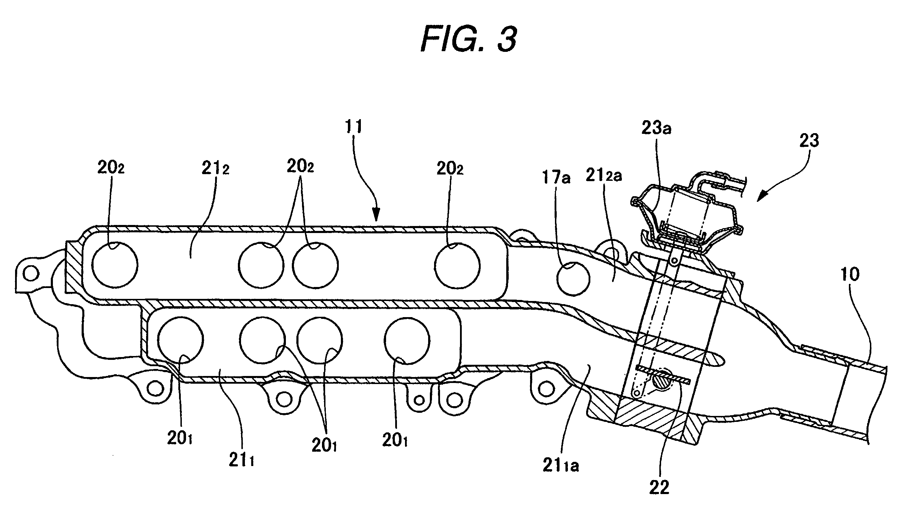

Formed in the intake manifold 11 are a first collective chamber 21₁ elongated in the cylinder aligning direction and communicating with the first intake ports 7₁ of the respective cylinders 2 via first branch passages 20₁ and a second collective chamber 21₂ elongated in the cylinder aligning direction and communicating with the second intake ports 7₂ of the respective cylinders 2 via second branch passages 20₂, and as shown in Fig. 3, the second collective chamber 21₂ is disposed above the first collective chamber 21₁. An opening/closing valve 22 is provided at an inlet 21₁a of the first collective chamber 21₁ which communicates with the intake passage 10, and the exhaust reflux gas induction port 17a is opened into an inlet 21₂a of the second collective chamber 21₂ which communicates with the intake passage 10. Note that the exhaust reflux gas induction port 17a may be formed into a portion of the second collective chamber 21₂ other than the inlet 21₂a thereof.

The opening/closing valve 22 is constituted by a butterfly valve that is operated by a negative pressure actuator 23 incorporating therein a diaphragm 23a, and an electromagnetic valve 25 adapted to be controlled by the control unit 19 is interposed along a passage connecting the negative pressure actuator 23 with a vacuum tank 24. Then, an opening sensor 26 is provided for detecting the opening of the opening/closing valve 22, and the negative pressure applied to the negative pressure actuator 22 is feedback controlled via the electromagnetic valve 25 such that the opening of the opening/closing valve 22 reaches a required opening; the opening/closing valve 22 is fully closed mainly when the load is low, and the opening of the opening/closing valve 22 is constructed so as to increase as the load increases. According to this construction, when the load is low, the suction via the first intake ports 7₁ is stopped, while the suction only via the second intake ports 7₂ having a higher swirl generation effect is performed so as to increase the swirl ratio, whereas when the load is high, the suction from the first intake ports 7₁ is also performed to reduce the swirl ratio.

Note that although it may be possible to form the exhaust reflux gas induction port 17a into the first collective chamber 21₁, if it is so done, even if the opening/closing valve 22 is closed, exhaust reflux gas is taken in via the first intake ports 7₁ while exhaust reflux is carried to thereby decrease the swirl ratio. Due to this, when the opening/closing valve 22 is closed, no exhaust reflux can be carried out, this imposing a limitation to the exhaust reflux timing. In contrast to this, according to the embodiment described heretofore, even if exhaust reflux is tried to be carried out when the opening/closing valve 22 is closed, since the suction is performed only via the second intake ports 7₂, there is no risk of the swirl ratio being reduced. Thus, this allows the exhaust reflux to be carried out even when the opening/closing valve 22 is closed, this increasing the degree of freedom at which the exhaust reflux timing is designed.

In addition, in a case where oil contained in blowby gas flows to the vicinity of the exhaust reflux gas induction port 17a, carbon contained in exhaust reflux gas mixes with the oil, which is then transformed into a tar-like substance, and since this tar-like oil adheres to the vicinity of the exhaust reflux gas induction port 17a, there may be a risk that a target exhaust reflux rate cannot be obtained. Here, since the specific gravity of the oil contained in blowby gas is heavy, most oil flows into the first collective chamber 21₁ disposed lower, and the oil is made difficult to flow to the vicinity of the exhaust reflux gas induction port 17a formed into the second collective chamber 21₂. Thus, the tar-like oil is effectively prevented from adhering to the vicinity of the exhaust reflux gas induction port 17a.

In the embodiment, the four cylinders 2 are divided into two groups; one group is positioned on one side relative to the cylinder aligning direction (on the left-hand side in Fig. 2), and the other group on the other side relative to the cylinder aligning direction (on the right-hand side in Fig. 2). In #1 and #2 cylinders grouped as the one group on the one side, the intake valves 5₁, 5₂ are disposed on the left-hand side, while the exhaust valves 6₁, 6₂ are disposed on the right-hand side. On the other hand, in #3 and #4 cylinders grouped as the other group on the other side, the intake valves 5₁, 5₂ are disposed on the right-hand side, while the exhaust valves 6₁, 6₂ are disposed on the left-hand side. Thus, the positional relationship of the first intake ports 7₁ and the second intake ports 7₂ relative to the cylinder aligning direction becomes symmetrical between #1 and #2 cylinders and #3 and #4 cylinders. Moreover, the first intake ports 7₁ and the first branch passages 20₁ of the respective cylinders 2 and upstream side portions 7₂a of the second intake ports 7₂ and the second branch ports 20₂ of the respective cylinders 2 are formed so as to extend in an inclined fashion inwardly toward the first and second collective chambers 21₁, 21₂, respectively. According to this construction, the pitch at which the first and second branch passages 20₁, 20₂ for #2 cylinder which is positioned inwardly relative to the cylinder aligning direction of the one group and the first and second branch passages 20₁, 20₂ for #3 cylinder which is positioned inwardly relative to the cylinder aligning direction of the other group are arranged can be narrower than the pitch at which the cylinders are arranged. As a result of this, the lengths of the first and second collective chambers 21₁, 21₂, can be shortened to thereby make the intake manifold 11 light in weight and compact in size.

In this case, the swirling direction of #1 and #2 cylinders 2 of the one group and that of #3 and #4 cylinders 2 of the other group become opposite to each other, but if the first intake ports 7₁ and the second intake ports 7₂ of every cylinder 2 are formed identical or symmetrical, the swirl ratio of the respective cylinders 2 becomes uniform and there is no risk of the performance of the engine 1 being affected.

Note that the second intake ports 7₂ affecting the swirl ratios need to be formed substantially identical or symmetrical over all the cylinders including the second branch passages 20₂ on the upstream side with a view to making the swirl ratios of the respective cylinders uniform. On the other hand, as to the first intake ports 7₁, the performance thereof is determined by their configuration, but the swirl ratio thereof is little affected by the configuration of the first branch passages 20₁ on the upstream side, and therefore the configurations of the first branch passages 20₁ of all the cylinders 2 do not actually have to be formed identical to or symmetrical with each other. To this end, in the embodiment of the invention, the first branch passages 20₁ for #1 and #4 cylinders of the cylinders 2 of the respective groups on the one and other sides which are positioned outwardly relative to the cylinder aligning direction are curved largely inwardly relative to the cylinder aligning direction so as to be directed toward the first collective chamber 21₁ when compared with the first branch passages 20₁ for #2 and #3 cylinders which are positioned inwardly relative to the cylinder aligning direction. According to this construction, the length of the first collective chamber 21₁ can be reduced as much as possible so that it can become shorter than that of the second collective chamber 21₂, thereby making it possible to make the intake manifold 11 more compact.

Note that while the first collective chamber 21₁ is disposed below the second collective chamber 21₂ in this embodiment, they may be disposed the other way round. In this case, the opening/closing valve 22 is provided at an inlet 21₂a of the second collective chamber 21₂ which is to be disposed lower, while the exhaust reflux gas induction port 17a is opened into the first collective chamber 21₁ which is then to be disposed upper. Note also that according to this construction, the swirl ratio decreases when the opening/closing valve 22 is closed, whereas the swirl ratio increases as the opening of the opening/closing valve 22 increases.

As is clear from what has been described heretofore, according to the invention, it is possible to perform exhaust reflux even when the opening/closing valve is closed without affecting the swirl ratios, whereby not only can the degree of freedom at which the exhaust reflux timing is designed be increased but also the clogging of the exhaust reflux gas induction part 17a can be suppressed.

While only certain embodiments of the invention have been specifically described herein, it will apparent that numerous modifications may be made thereto without departing from the scope of the invention.

## Claims

1. An air intake system for an internal combustion engine (1) having a plurality of cylinders (2), comprising:
a cylinder head (3) formed with at least first and second intake ports (7₁, 7₂) for each cylinder (2), said first and second intake ports (7₁, 7₂) having different configurations with each other;
an intake manifold (11) formed with a first collective chamber (21₁) communicating with said first intake port (7₁) of said each cylinder (2) and
a second collective chamber (21₂) communicating with said second intake port (7₂) of said each cylinder (2);
a common intake passage (10) disposed upstream of said first and second collective chambers (21₁, 21₂) of said intake manifold (11); and
an opening/closing valve (22) provided at an inlet of said first collective chamber (21₁) communicating with said common intake passage (10), wherein a blowby gas induction port (16a) is formed in said intake passage (10), and
an exhaust reflux gas induction port (17a) is formed only in said second collective chamber (21₂) disposed in vertical direction above said first collective chamber (21₁).

2. The air intake system according to claim 1, wherein said first collective chamber (21₁) communicating with said first intake ports (7₁) formed in a straight shape is smaller in dimension than said second collective chamber (21₂) communicating with said second intake ports (7₂) formed into a bent shape.

## Patentansprüche

1. Lufteinlasssystem für eine Brennkraftmaschine (1) mit einer Mehrzahl von Zylindern (2), umfassend:
einen Zylinderkopf (3), der mindestens mit ersten und zweiten Einlassanschlüssen (7₁, 7₂) für jeden Zylinder (2) ausgebildet ist, wobei die ersten und zweiten Einlassanschlüsse (7₁, 7₂) zueinander unterschiedliche Konfigurationen aufweisen;
einen Einlasskrümmer (11), der mit einer mit dem ersten Einlassanschluss (7₁) jedes Zylinders (2) kommunizierenden ersten Sammelkammer (21₁) und einer mit dem zweiten Einlassanschluss (7₂) jedes Zylinders (2) kommunizierenden zweiten Sammelkammer (21₂) ausgebildet ist;
einen gemeinsamen Einlassdurchgang (10), der stromaufwärts von den ersten und zweiten Sammelkammern (21₁, 21₂) des Einlasskrümmers (11) angeordnet ist; und
ein Öffnungs-/Schließventil (22), das an einem Einlass der ersten Sammelkammer (21₁) angebracht ist und mit dem gemeinsamen Einlassdurchgang (10) kommuniziert, wobei ein Blow-by-Gas-Einlassanschluss (16a) in dem Einlassdurchgang (10) ausgebildet ist, und
ein Abgasrückflussgas-Einlassanschluss (17a) nur in der in vertikaler Richtung oberhalb der ersten Sammelkammer (21₁) angeordneten zweiten Sammelkammer (21₂) ausgebildet ist.

2. Lufteinlasssystem nach Anspruch 1,
**dadurch gekennzeichnet, dass**
die mit den in einer geraden Form ausgebildeten ersten Einlassanschlüssen (7₁) kommunizierende erste Sammelkammer (21₁) dimensional kleiner ist als die mit den in einer gekrümmten Form ausgebildeten zweiten Einlassanschlüssen (7₂) kommunizierende zweite Sammelkammer (21₂).

## Revendications

1. Système d'admission d'air pour un moteur à combustion interne (1) ayant une pluralité de cylindres (2), comprenant :
une culasse (3) formée avec au moins des premier et second orifices d'admission (7₁, 7₂) pour chaque cylindre (2), lesdits premier et second orifices d'admission (7₁, 7₂) ayant des configurations différentes l'un par rapport à l'autre ;
un collecteur d'admission (11) formé avec une première chambre collective (21₁) communicant avec ledit premier orifice d'admission (7₁) dudit chaque cylindre (2) et une seconde chambre collective (21₂) communicant avec ledit second orifice d'admission (7₂) dudit chaque cylindre (2);
un passage d'admission commun (10) disposé en aval desdites première et seconde chambres collectives (21₁, 21₂) dudit collecteur d'admission (11); et
une soupape d'ouverture/fermeture (22) prévue au niveau d'une entrée de ladite première chambre collective (21₁) communicant avec ledit passage d'admission commun (10), dans lequel un orifice d'induction de gaz de soufflage (16a) est formé dans ledit passage d'admission (10), et
un orifice d'induction de gaz de reflux d'échappement (17a) est formé seulement dans ladite second chambre collective (21₂) disposée dans une direction verticale au-dessus de ladite première chambre collective (21₁).

2. Système d'admission d'air selon la revendication 1, dans lequel ladite première chambre collective (21₁) communicant avec ledit premier orifice d'admission (7₁) ayant une forme droite est de dimension plus petite que ladite seconde chambre collective (21₂) communicant avec ledit second orifice d'admission (7₂) ayant une forme pliée.
